# EUROPEAN PATENT APPLICATION

(11) **EP 4 340 071 A1**
(43) Date of publication of application: **20.03.2024**
(21) Application number: 22916116.1
(22) Date of filing: 27.12.2022
(51) Int. Cl.: H01M 4/58, H01M 4/36

(54) **POSITIVE ELECTRODE ACTIVE MATERIAL, POSITIVE ELECTRODE MIXTURE, AND SECONDARY BATTERY**

(30) Priority: 28.12.2021 JP 2021213841
(71) Applicant: Renaisis Co., Ltd., Saga 840-1106 (JP)
(72) Inventor: YAMASAKI Sadayoshi, Miyaki-gun, Saga 840-1106 (JP)
(74) Representative: Hasegawa, Kan
(86) International application number: PCT/JP2022/048274
(87) International publication number: WO 2023/127894

(57) **Abstract**

Provided is a positive electrode active material for a secondary battery that does not require lithium or a transition metal element. A positive electrode active material is a composite of: a sulfur-containing compound containing Na₂S₂O₃ or K₂S₂O₃; and a carbonized product. A secondary battery including a positive electrode formed using the positive electrode active material has excellent charge-discharge characteristics. A tire-derived carbonized product is suitably used as the carbonized product in the composite.

## Description

### Technical Field

### Reference to Related Application

The present application claims the benefit of and priority to Japanese Patent Application (JP 2021-213841) filed on December 28, 2021. Priority is explicitly claimed to the patent application described above, the entire disclosure of which is incorporated in the present specification by reference for all purposes.

The present invention relates to a positive electrode active material containing a sulfur-containing compound of sodium or potassium, a positive electrode mixture containing the positive electrode active material, and a secondary battery.

### Background Art

In recent years, demand for lithium secondary batteries has been increasing as small-sized power sources for mobile phones and the like, and medium-sized and large-sized power sources for electric vehicles, power storage, and the like. On the other hand, lithium, a main constituent element of a positive electrode active material for lithium secondary batteries, is produced from a salt lake, but such a profitable production is limited to some countries, thus posing concerns about supply uncertainty and the soaring price along with the growing demand for lithium secondary batteries. Thus, research and development have been conducted on positive electrode active materials for new secondary batteries to replace lithium secondary batteries.

Sodium secondary batteries can be produced using a sodium compound, which is abundant as a resource, as a positive electrode active material in the constituent materials and thus are alternative candidates for lithium secondary batteries. Various sodium-transition metal composite compounds have been proposed as positive electrode active materials for sodium secondary batteries to date. Such sodium-transition metal composite compounds have been reported; examples include: a sodium iron cobalt composite metal oxide (e.g., Patent Document 1); a sodium manganese cobalt nickel composite metal oxide (e.g., Patent Document 2); and a sodium manganese titanium nickel composite oxide (e.g., Patent Document 3).

In addition, as a positive electrode active material for sodium secondary batteries other than the sodium transition metal composite compound, Patent Document 4 reports a positive electrode active material including a carbon skeleton derived from a carbon source compound selected from novel polycyclic aromatic hydrocarbons and sulfur (S) attached to the carbon skeleton.

Furthermore, examples of alternative candidates for lithium secondary batteries other than sodium secondary batteries include potassium secondary batteries. Patent Document 5 reports a potassium secondary battery produced using a composite oxide containing potassium, a transition metal, and phosphorus as a positive electrode active material.

### Citation List

### Patent Document

Patent Document 1: JP 2013-203565 A
Patent Document 2: JP 2014-229452 A
Patent Document 3: JP 2012-206925 A
Patent Document 4: JP 5737679 B
Patent Document 5: JP 6800322 B

### Summary of Invention

### Technical Problem

The positive electrode active materials for sodium secondary batteries disclosed in Patent Documents 1 to 3 and the like require a transition metal element, such as cobalt or nickel, which is scarce as a resource. In addition, the positive electrode active material of Patent Document 4 does not contain a transition metal element but requires synthesis for binding a special carbon skeleton and sulfur, and the positive electrode active material does not contain an alkali metal in itself, and thus when the positive electrode active material is used as a battery, a process of pre-doping the positive electrode active material with an alkali metal ion in an electrolytic solution is mandatory. Because of such problems, there is room for improvement in supply of raw materials, production cost, operating conditions, and the like. Furthermore, potassium secondary batteries have been reported in Patent Document 5 and the like, but development examples are scarce, and candidates for useful positive electrode active materials have been sought.

Under such circumstances, an object of the present invention is to provide: a new positive electrode active material that does not require lithium and/or a transition metal element; a positive electrode mixture containing the positive electrode active material; and a secondary battery.

### Solution to Problem

As a result of diligent studies to solve the above problems, the present inventor has found that the following aspects satisfy the above object, and have completed the present invention.

That is, the present invention relates to the following aspects.

<1A> A positive electrode active material including a sulfur-containing compound represented by Na₂S₂O₃ or K₂S₂O₃.
<2A> A positive electrode mixture containing:
   the positive electrode active material described in < 1A>; and
   a conductive material.
<3A> A secondary battery including:
   a positive electrode;
   a negative electrode; and
   an electrolyte, wherein
   the positive electrode is formed using the positive electrode mixture described in <2A>.
<4A> The secondary battery according to <3A>, being a sodium secondary battery, wherein
   the electrolyte is a liquid electrolyte containing:
   a sodium salt as an electrolyte salt; and
   a fluorinated phosphate ester as a non-aqueous solvent.
<5A> The secondary battery according to <4A>, wherein the liquid electrolyte includes:
   a sodium salt; and
   tris(2,2,2-trifluoroethyl)phosphate (TFEP).
<6A> The secondary battery according to <4A> or <5A>, wherein the sodium salt is sodium bis(fluorosulfonyl)imide (NaFSI).
<7A> The secondary battery according to <3A>, being a potassium secondary battery, wherein
   the electrolyte is a liquid electrolyte containing:
   a potassium salt as an electrolyte salt; and
   a fluorinated phosphate ester as a non-aqueous solvent.
<8A> The secondary battery according to <7A>, wherein the liquid electrolyte includes:
   a potassium salt; and
   tris(2,2,2-trifluoroethyl)phosphate (TFEP).
<9A> The secondary battery according to <7A> or <8A>, wherein the potassium salt is potassium bis(fluorosulfonyl)imide (KFSI).

<1B> A positive electrode active material containing a composite of:
   a sulfur-containing compound containing Na₂S₂O₃ or K₂S₂O₃; and
   a carbonized product.
<2B> The positive electrode active material according to <1B>, wherein the carbonized product is a tire-derived carbonized product.
<3B> A positive electrode mixture containing:
   the positive electrode active material described in <1B> or <2B>; and
   a conductive material.
<4B> A secondary battery including:
   a positive electrode;
   a negative electrode; and
   an electrolyte, wherein
   the positive electrode is formed using the positive electrode mixture described in <3B>.
<5B> The secondary battery according to <4B>, being a sodium secondary battery, wherein
   the electrolyte is a liquid electrolyte containing:
   a sodium salt as an electrolyte salt; and
   a fluorinated phosphate ester as a non-aqueous solvent.
<6B> The secondary battery according to <5B>, wherein the liquid electrolyte includes:
   a sodium salt; and
   tris(2,2,2-trifluoroethyl)phosphate (TFEP).
<7B> The secondary battery according to <5B> or <6B>, wherein the sodium salt is sodium bis(fluorosulfonyl)imide (NaFSI).
<8B> The secondary battery according to <4B>, being a potassium secondary battery, wherein
   the electrolyte is a liquid electrolyte containing:
   a potassium salt as an electrolyte salt; and
   a fluorinated phosphate ester as a non-aqueous solvent.
<9B> The secondary battery according to <8B>, wherein the liquid electrolyte includes:
   a potassium salt; and
   tris(2,2,2-trifluoroethyl)phosphate (TFEP).
<10B> The secondary battery according to <8B> or <9B>, wherein the potassium salt is potassium bis(fluorosulfonyl)imide (KFSI).

<1C> A positive electrode active material containing a sulfur-containing compound represented by Formula (1) or Formula (2):
   [Chem. 1]

   MₓS_{y}O_{z} (1)

   where in Formula (1), M is Na or K, x is in a range of more than 0 and 3 or less, y is 1 or more and 7 or less, and z is 1 or more and 7 or less.
   [Chem. 2]

   MₓHS_{y}O_{z} (2)

   where in Formula (2), M is Na or K, x is in a range of more than 0 and 3 or less, y is more than 0 and 7 or less, and z is 1 or more and 7 or less.
<2C> The positive electrode active material according to <1C>, wherein the sulfur-containing compound contains a sulfur-containing compound represented by Na₂S₂O₃ or K₂S₂O₃.
<3C> The positive electrode active material according to <1C>, wherein the sulfur-containing compound includes a sulfur-containing compound represented by Na₂S₂O₃ or K₂S₂O₃.
<4C> The positive electrode active material according to <1C> or <2C>, containing a composite of the sulfur-containing compound and a carbonized product.
<5C> The positive electrode active material according to <4C>, wherein the carbonized product is a tire-derived carbonized product.
<6C> A positive electrode mixture containing:
   the positive electrode active material described in any one of <1C> to <5C>; and
   a conductive material.
<7C> A secondary battery including:
   a positive electrode;
   a negative electrode; and
   an electrolyte, wherein
   the positive electrode is formed using the positive electrode mixture described in <6C>.

### Advantageous Effects of Invention

According to the present invention, there are provided:
a positive electrode active material which does not contain lithium or a transition metal element, and is used for a new secondary battery which may replace a sodium secondary battery or a potassium secondary battery known in the art;
a positive electrode mixture containing the positive electrode active material; and
the secondary battery.

### Brief Description of Drawings

FIG. 1 is a photograph showing measurement data of a charge-discharge test of a secondary battery (positive electrode active material: sodium thiosulfate pentahydrate (reagent)) of Experimental Example 1.
FIG. 2 is a chart showing an XRD pattern of a positive electrode active material of Experimental Example 2.
FIG. 3 is a chart showing XAFS spectra (S K-edge) of the positive electrode active materials of (a) Experimental Example 1 (sodium thiosulfate pentahydrate (reagent)) and (b) Experimental Example 2 (synthesized product).
FIG. 4 is a photograph showing an SEM image of the positive electrode active material of Experimental Example 2.
FIG. 5 is a chart showing an SEM-EDX mapping of the positive electrode active material of Experimental Example 2.

### Description of Embodiments

Hereinafter, the present invention will be described in detail by showing examples and the like, but the present invention is not limited to the examples and the like below and can be freely modified and implemented without departing from the gist of the present invention. In the present specification, "from ... to ..." or "... to ..." is used as an expression including numerical values or physical quantities before and after "to". In addition, in the present specification, the expression "A and/or B" includes "only A", "only B", and "both A and B".

### 1. Positive electrode active material

A positive electrode active material according to an embodiment of the present invention contains a sulfur-containing compound represented by Formula (1) below.
[Chem. 3]

MₓS_{y}O_{z} (1)

In Formula (1), M is sodium (Na) or potassium (K). x represents a proportion of M and is in a range of more than 0 and 3 or less.

In Formula (1), y represents a proportion of sulfur (S) and is in a range of 1 or more and 7 or less.

In Formula (1), z represents a proportion of oxygen (O) and is in a range of 1 or more and 7 or less.

The present invention also includes a case in which x, y, and z in Formula (1) are each not an integer. That is, the present invention also includes a case in which the sulfur-containing compound represented by Formula (1) is a non-stoichiometric oxide.

When x, y, and z in Formula (1) are in the above ranges, the positive electrode active material can provide a positive electrode that can be repeatedly charged and discharged. The values of x, y, and z can be adjusted by controlling the amounts of raw materials used, production conditions, and the like.

In addition, another aspect of the positive electrode active material of the present invention contains a sulfur-containing compound represented by Formula (2) below.
[Chem. 4]

MₓHS_{y}O_{z} (2)

In Formula (2), M is Na or K. x represents a proportion of M and is in a range of more than 0 and 3 or less.

In Formula (2), y represents a proportion of sulfur (S) and is in a range of more than 0 and 7 or less.

In Formula (2), z represents a proportion of oxygen (O) and is in a range of 1 or more and 7 or less.

The present invention also includes a case in which x, y, and z in Formula (2) are each not an integer. That is, the present invention also includes a case in which the sulfur-containing compound represented by Formula (2) is a non-stoichiometric oxide.

When x, y, and z in Formula (2) are in the above ranges, the positive electrode active material can provide a positive electrode that can be repeatedly charged and discharged. The values of x, y, and z can be adjusted by controlling the amounts of raw materials used, production conditions, and the like.

A suitable example of the sulfur-containing compound according to an embodiment of the present invention is a sulfur-containing compound in which M is Na in Formula (1) or (2). Specific examples of such a sulfur-containing compound include Na₂SO₃, NaHSO₃, Na₂SO₄, NaHSO₄, Na₂SO₅, Na₂SO₈, Na₂S₂O₃, Na₂S₂O₄, Na₂S₂O₅, Na₂S₂O₆, Na₂S₂O₇, and Na₂S₂O₈. Among these, sodium thiosulfate (Na₂S₂O₃) is a suitable example.

Another suitable example of the positive electrode active material according to an embodiment of the present invention is a sulfur-containing compound in which M is K in Formula (1) or (2). Such a sulfur-containing compound is specifically one or more selected from the group consisting of K₂SO₃, KHSO₃, K₂SO₄, KHSO₄, K₂SO₅, K₂SO₈, K2S₂O₃, K₂S₂O₄, K₂S₂O₅, K₂S₂O₆, K₂S₂O₇, and K₂S₂O₈. Among these, potassium thiosulfate (K₂S₂O₃) is a suitable example.

The positive electrode active material according to an embodiment of the present invention can contain one type or two or more types of the above sulfur-containing compounds to the extent that the object of the present invention is not impaired.

A suitable example of the positive electrode active material according to an embodiment of the present invention is a positive electrode active material containing a sulfur-containing compound represented by Na₂S₂O₃ or K₂S₂O₃. In this case, the positive electrode active material may contain a positive electrode active material other than Na₂S₂O₃ or K₂S₂O₃.

In addition, a suitable example of the positive electrode active material according to an embodiment of the present invention is a positive electrode active material including a sulfur-containing compound represented by Na₂S₂O₃ or K₂S₂O₃.

As described in Examples, even when either sodium thiosulfate (Na₂S₂O₃) or potassium thiosulfate (K₂S₂O₃) is used alone as an active material, it can serve as a positive electrode active material capable of providing a positive electrode that can be repeatedly charged and discharged.

Hereinafter, the sulfur-containing compound represented by Formula (1) (including the case of the suitable sulfur-containing compound, Na₂S₂O₃ or K₂S₂O₃) and the sulfur-containing compound represented by Formula (2) are collectively referred to as "the sulfur-containing compound according to an embodiment of the present invention", unless there is a need to distinguish between the two.

In the positive electrode active material according to an embodiment of the present invention, the sulfur-containing compound according to an embodiment of the present invention is not limited to a crystal and may be amorphous or a mixture of crystalline and amorphous forms. In addition, the sulfur-containing compound according to an embodiment of the present invention may be an anhydrous compound, or may be used as a hydrate.

The positive electrode active material according to an embodiment of the present invention contains the sulfur-containing compound according to an embodiment of the present invention (preferably a sulfur-containing compound represented by Na₂S₂O₃ or K₂S₂O₃) or may contain only the sulfur-containing compound according to an embodiment of the present invention (preferably a sulfur-containing compound represented by Na₂S₂O₃ or K₂S₂O₃), but the sulfur-containing compound according to an embodiment of the present invention may be formed into a composite with another material as long as the effects of the present invention are not impaired.

Examples of the other material include a carbonized product. In the present specification, the "carbonized product" is a material formed by carbonization of a carbon-containing raw material (organic matter) and may only consists of carbon (C) but may contain an element besides carbon to the extent that the object of the present invention is not impaired.

Examples of the element besides carbon include nitrogen (N), sulfur (S), oxygen (O), or a metal element, such as Fe, but are not limited as long as the object of the present invention is not impaired.

The carbonized product can be a porous material although this depends on the carbon-containing raw material and/or firing conditions.

The production conditions of the carbonized product are appropriately determined in consideration of the type of carbon-containing raw material and the physical properties (crystallinity, porosity, and the like) of the target carbonized product. Typically, the carbon-containing raw material is heated under a low oxygen partial pressure (e.g., while purging with an inert gas, such as N₂) to perform carbonization treatment. The carbonization treatment temperature is, for example, 500°C or higher and 2000°C or lower.

Any carbon-containing raw material can be used for a raw material for the carbonized product as long as the object of the present invention is not impaired, and examples include biomass raw materials (such as wood, bamboo, and chaff) and plastics, such as various resin materials and rubber materials.

The positive electrode active material according to an embodiment of the present invention preferably contains a composite of the sulfur-containing compound according to an embodiment of the present invention and a carbonized product (which may be hereinafter referred to as "the composite according to an embodiment of the present invention" or simply as "the composite").

Here, the composite according to an embodiment of the present invention is not simply a mixture of the sulfur-containing compound according to an embodiment of the present invention and the carbonized product but is a composite formed by physically and/or chemically compounding the sulfur-containing compound according to an embodiment of the present invention with the carbonized product. The physically compounded composite is a composite in which the sulfur-containing compound according to an embodiment of the present invention is physically retained on the carbonized product, and examples include a composite in which the sulfur-containing compound according to an embodiment of the present invention is supported on the carbonized product, a composite in which the sulfur-containing compound according to an embodiment of the present invention is adsorbed on the carbonized product, and a composite in which the sulfur-containing compound according to an embodiment of the present invention is deposited on the carbonized product. The chemically compounded composite is a composite in a state in which the sulfur-containing compound according to an embodiment of the present invention and a carbonized product are chemically bonded to each other and can be produced, for example, by mixing the sulfur-containing compound according to an embodiment of the present invention or its precursor compound with the carbonized product and heat-treating the mixture in an inert gas atmosphere.

The positive electrode active material according to an embodiment of the present invention may contain another positive electrode active material as necessary, but preferably contains only the composite according to an embodiment of the present invention as long as the target electrode performance is satisfied.

In the composite according to an embodiment of the present invention, the sulfur-containing compound according to an embodiment of the present invention compounded with the carbonized product may be a solid, a liquid, or in solid-liquid mixed form.

Using the composite according to an embodiment of the present invention in the positive electrode active material according to an embodiment of the present invention improves the battery performance. Although the reason for that is partially unclear at the present stage, one reason is presumably because formation of the composite of the sulfur-containing compound according to an embodiment of the present invention and the carbonized product facilitate electron transfer between the carbonized product and the sulfur-containing compound compared with a mixture of the sulfur-containing compound according to an embodiment of the present invention and the carbonized product.

A suitable example of the carbon-containing raw material used as a raw material for the carbonized product in the above composite is a tire. A tire contains rubber (e.g., natural rubber (NR), styrene-butadiene rubber (SBR), and isoprene rubber (IR)) as a main raw material and contains various compounding ingredients and structural materials. An example of the positive electrode active material according to an embodiment of the present invention is thus a composite obtained using a tire-derived carbonized product.

The proportion of the sulfur-containing compound according to an embodiment of the present invention in the positive electrode active material according to an embodiment of the present invention is, for example, from 5 to 100 wt.% when the entire positive electrode active material according to an embodiment of the present invention is regarded as 100 wt.% (on a dry weight basis).

The positive electrode active material according to an embodiment of the present invention can be in any form, as long as the object of the present invention is not impaired. Examples include a particulate form, an island form, and a film form.

### 2. Positive electrode mixture

A positive electrode mixture according to an embodiment of the present invention contains the positive electrode active material according to an embodiment of the present invention and a conductive material.

The positive electrode active material according to an embodiment of the present invention does not have very high electrical conductivity. Thus, when the positive electrode is formed only with the positive electrode active material, the resistance in the electrode would increase. Thus, the positive electrode active material, when used, is usually mixed with a conductive material, which is another electrically conducting material, (and with another material as necessary) to ensure conduction in the electrode.

The conductive material serves to improve electron conductivity when the electrode is formed. The conductive material may be any material that has conductivity (electron conductivity) and does not impair the performance of the positive electrode active material according to an embodiment of the present invention and may be an inorganic material or an organic material but is typically a carbon-based material.

As the carbon-based material, any carbon-based material used in a secondary battery or a fuel cell can be used, and more specific examples include graphite powders, carbon blacks (such as acetylene black, Ketjen black, and furnace black), and fibrous carbon materials (such as carbon nanotubes, carbon nanofibers, and vapor-grown carbon fibers).

Among these, a carbon black is a fine particle and has a large surface area, and when added into the positive electrode mixture, it can increase the conductivity inside the resulting electrode and also improve the charge-discharge efficiency and the large current discharge characteristics.

The form and size of the carbon-based material can be appropriately selected in consideration of the intended use of the electrode and the like. The carbon-based material, when in particulate form, for example, has a particle size of 0.03 to 500 µm, and the carbon-based material in fibrous form has a diameter of 2 nm to 20 µm and a total length of approximately 0.03 to 500 µm.

One type of conductive material may be used in an embodiment of the present invention, or two or more types of conductive materials different in size (particle size, fiber diameter and fiber length), crystallinity, and/or the like may be used in any proportion.

The proportion of the conductive material in the positive electrode mixture can be appropriately selected in consideration of the intended use of the electrode and the like. For the conductive material made of a carbon-based material, the proportion of the carbon-based material in the electrode is usually from 5 to 100 parts by weight per 100 parts by weight of the electrode active material.

The positive electrode mixture according to an embodiment of the present invention may be composed only of the positive electrode active material according to an embodiment of the present invention and the conductive material but may contain an additional component to the extent that the object of the present invention is not impaired.

Examples of the additional component include a binder.

The binder has a function as a binding agent for binding other electrode constituent materials.

Examples of the binder include a binder composed of an organic polymer compound. Examples of the organic polymer compound as the binder include polysaccharides and their derivatives, such as methyl cellulose, hydroxymethyl cellulose, hydroxyethyl cellulose, hydroxypropyl cellulose, carboxymethyl hydroxyethyl cellulose, and nitrocellulose;
poly(vinylidene fluoride) (which may be hereinafter referred to as PVDF), poly(tetrafluoroethylene) (which may be hereinafter referred to as PTFE), tetrafluoroethylene-hexafluoropropylene-vinylidene fluoride-based copolymers, hexafluoropropylene-vinylidene fluoride-based copolymers, tetrafluoroethylene-perfluorovinyl ether-based copolymers; phenolic resins; melamine resins; polyurethane resins; urea resins; polyamide resins; polyimide resins; polyamide-imide resins; petroleum pitches; and coal pitches.

One type of binder or two or more types of binders may be used.

The blending amount of the binder in the constituent materials of the electrode is, for example, usually approximately from 0.5 to 50 parts by weight and preferably approximately from 1 to 30 parts by weight per 100 parts by weight of the total of the positive electrode active material and the conductive material.

### 3. Secondary battery

A secondary battery according to an embodiment of the present invention includes a positive electrode, a negative electrode, and an electrolyte, and is characterized in that the positive electrode is formed using the positive electrode mixture according to an embodiment of the present invention. The structure of the secondary battery according to an embodiment of the present invention is not particularly limited, and a structure of a secondary battery known in the art can be employed. Examples include laminated (flat) batteries and wound (cylindrical) batteries.

Each of the components will be described below.

The positive electrode includes a current collector and a positive electrode active material layer formed on a surface of the current collector. The positive electrode active material layer is formed of the positive electrode mixture (the positive electrode active material, the conductive material, and the binder) according to an embodiment of the present invention.

The current collector is not particularly limited, and a current collector known in the art can be used. Examples include foils, meshes, expanded grids (expanded metals), and punched metals formed from an electrically conducting material, such as aluminum, nickel, copper, and/or stainless steel (SUS).

The size and thickness of the current collector are determined according to the intended use of the battery, and a suitable size can be appropriately selected according to the size of the positive electrode to be used.

In a method for producing the positive electrode, the positive electrode is typically produced by mixing a positive electrode mixture (a positive electrode active material, a conductive material, and a binder) with a solvent to adjust a slurry, applying the slurry to a current collector, drying the slurry, and then fixing the dried slurry, for example, by pressing to form a positive electrode active material layer on the surface of the current collector.

Examples of the solvent of the slurry include amines, such as N,N-dimethylaminopropylamine and diethyltriamine; ethers, such as ethylene oxide and tetrahydrofuran; ketones, such as methyl ethyl ketone; esters, such as methyl acetate; and aprotic polar solvents, such as dimethylacetamide and N-methyl-2-pyrrolidone.

The method for applying the slurry on the current collector is not limited as long as the object of the present invention is not impaired. Examples include a slit-die coating method, a screen coating method, a curtain coating method, a knife coating method, a gravure coating method, and an electrostatic spray method.

The negative electrode includes a current collector and a negative electrode active material layer formed on a surface of the current collector. The negative electrode active material layer is typically formed of a negative electrode mixture containing a negative electrode active material.

Examples of the negative electrode active material include carbon materials that can store and desorb sodium ions and potassium ions, such as natural graphites, artificial graphites, cokes, hard carbons, carbon blacks, pyrolytic carbons, carbon fibers, and organic polymer compound burned substance. The form of the carbon material may be, for example, any of a flake form like natural graphite, a spherical form like mesocarbon microbeads, a fibrous form like graphitized carbon fibers, or an aggregate of fine powder. Here, the carbon material may also serve as a conductive material.

As described above, in an embodiment of the present invention, the negative electrode active material is not limited to a particular material, but hard carbon may be used.

Hard carbon is a carbon material whose stacking order hardly changes even when the material is heat-treated at a high temperature of 2000°C or higher and is also referred to as non-graphitizable carbon. Examples of the hard carbon include a carbon fiber produced by carbonizing an infusibilized fiber, which is an intermediate product in a production process of a carbon fiber, at approximately 1000 to 1400°C, and a carbon material produced by oxidizing an organic compound in air at approximately 150 to 300°C and then carbonizing the resultant at approximately 1000 to 1400°C. The method for producing the hard carbon is not particularly limited, and hard carbon produced by a method known in the art can be used.

The content of the negative electrode active material in the negative electrode active material layer is not particularly limited but is preferably
from 80 to 95 mass%.

For the binder, the same binders as those that can be used in the positive electrode can be used, and thus the description about these is omitted. For the current collector, an electrically conducting material, such as aluminum, nickel, copper, or stainless steel (SUS), is used. The current collector is composed of a foil, a mesh, an expanded grid (expanded metal), a punched metal, or the like in the same manner as in the current collector for the positive electrode.

In addition, for a method for forming the negative electrode active material layer on the current collector, a method similar to the method for forming the positive electrode active material layer on the current collector can be employed.

In the secondary battery according to an embodiment of the present invention, the type of the electrolyte is not particularly limited and can be selected as necessary. The electrolyte may be at least one selected from a solid electrolyte and a liquid electrolyte (i.e., an electrolytic solution). When the electrolyte is an electrolytic solution, the electrolytic solution contains an electrolyte salt and a non-aqueous solvent.

In the secondary battery according to an embodiment of the present invention, the electrolyte is typically a liquid electrolyte (electrolytic solution), and a solution obtained by dissolving an electrolyte, a sodium salt or a potassium salt, in a non-aqueous solvent is used.

For the electrolyte salt, an electrolyte salt used in a sodium secondary battery or a potassium secondary battery can be used.

For a sodium secondary battery, examples of the electrolyte salt include sodium perchlorate (NaClO₄), sodium bis(trifluoromethanesulfonyl)imide (NaTFSI), sodium bis(fluorosulfonyl)imide (NaFSI), sodium 2-trifluoromethyl-4,5-dicyanoimidazolate (NaTDI), sodium bis(pentafluoroethylsulfonyl)imide (NaBETI), sodium trifluoromethanesulfonate (NaTF), sodium fluoride (NaF), and sodium nitrate (NaNO₃). One type of these electrolyte salts may be used, or two or more types may be used in combination as long as the effects of the present invention are not impaired.

Among these, sodium bis(fluorosulfonyl)imide (NaFSI) is a suitable example.

For a potassium secondary battery, examples of the electrolyte salt include potassium hexafluorophosphate (KPF₆), potassium bis(trifluoromethanesulfonyl)imide (KTFSI), potassium bis(fluorosulfonyl)imide (KFSI), and potassium trifluoromethanesulfonate (KSO₃CF₃) (KTf). One type of these electrolyte salts may be used, or two or more types may be used in combination as long as the effects of the present invention are not impaired.

Among these, potassium bis(fluorosulfonyl)imide (KFSI) is a suitable example.

The electrolyte salt concentration (sodium salt concentration or potassium salt concentration) in the electrolytic solution is preferably high, and the electrolyte salt concentration is, for example, 1 mol/L or higher and not higher than the saturation solubility.

For the non-aqueous solvent, a non-aqueous solvent used for a sodium secondary battery or a potassium secondary battery can be used, and a carbonate, such as propylene carbonate, ethylene carbonate, dimethyl carbonate, diethyl carbonate, or ethyl methyl carbonate; an ether, such as 1,2-dimethoxyethane or 1,3-dimethoxypropane; an amide, such as N,N-dimethylformamide or N,N-dimethylacetamide; a carbamate, such as 3-methyl-2-oxazolidone; or an organic solvent described above into which a fluorine substituent is further introduced can be used.

In addition, for the secondary battery according to an embodiment of the present invention, a fluorinated phosphate ester (fluorinated phosphate) can be used as the non-aqueous solvent of the electrolytic solution.

Although a fluorinated phosphate ester is usually used as an additive to other non-aqueous solvents to impart functions of flame retardancy and self-extinguishing properties to the electrolytic solution, the secondary battery according to an embodiment of the present invention is produced using the positive electrode active material according to an embodiment of the present invention described above, and thus the fluorinated phosphate ester itself is used as the non-aqueous solvent of the electrolytic solution.

Thus, the secondary battery according to an embodiment of the present invention has an advantage of excellent flame retardancy and self-extinguishing properties by the use of the fluorinated phosphate ester for the non-aqueous solvent of the electrolytic solution.

Examples of the fluorinated phosphate ester include tris(2,2-difluoroethyl)phosphate, tris(2,2,2-trifluoroethyl)phosphate, bis(2,2,2-trifluoroethyl)methylphosphate, and bis(2,2,2-trifluoroethyl)ethylphosphate. Two or more types of these fluorinated phosphate esters may be mixed and used.

Among these, tris(2,2,2-trifluoroethyl)phosphate (TFEP) is preferably used.

A suitable example of the secondary battery according to an embodiment of the present invention is a secondary battery which is a sodium secondary battery and in which the electrolyte is a liquid electrolyte (electrolytic solution) containing the sodium salt as an electrolyte salt and a fluorinated phosphate ester as a non-aqueous solvent.

In this case, the liquid electrolyte (electrolytic solution) preferably includes the sodium salt and tris(2,2,2-trifluoroethyl)phosphate (TFEP). In addition, the sodium salt is more preferably sodium bis(fluorosulfonyl)imide (NaFSI). The electrolyte concentration (sodium salt concentration) in the electrolytic solution is preferably high, and the sodium salt concentration is, for example, 1 mol/L or higher and not higher than the saturation solubility.

In the secondary battery according to an embodiment of the present invention, a liquid electrolyte (electrolytic solution) disclosed in Examples is a suitable example.

For the secondary battery according to an embodiment of the present invention which is a sodium secondary battery, an electrolytic solution produced by dissolving sodium bis(fluorosulfonyl)imide (NaFSI) as a sodium salt in tris(2,2,2-trifluoroethyl)phosphate (TFEP) as a non-aqueous solvent is a suitable example. The electrolyte concentration (sodium salt concentration) in the electrolytic solution is preferably high, and the sodium salt concentration is, for example, 1 mol/L or higher and not higher than the saturation solubility.

A suitable example of the secondary battery according to an embodiment of the present invention is a secondary battery which is a potassium secondary battery and in which the electrolyte is a liquid electrolyte (electrolytic solution) containing a potassium salt as an electrolyte salt and a fluorinated phosphate ester as a non-aqueous solvent. In this case, the liquid electrolyte (electrolytic solution) preferably includes the sodium salt and tris(2,2,2-trifluoroethyl)phosphate (TFEP). In addition, the potassium salt is more preferably potassium bis(fluorosulfonyl)imide (KFSI). The electrolyte concentration (potassium salt concentration) in the electrolytic solution is preferably high, and the sodium salt concentration is, for example, 1 mol/L or higher and not higher than the saturation solubility.

In addition, for the secondary battery according to an embodiment of the present invention which is a potassium secondary battery, an electrolytic solution obtained by dissolving potassium bis(fluorosulfonyl)imide (KFSI) as a potassium salt in tris(2,2,2-trifluoroethyl)phosphate (TFEP) is a suitable example. The electrolyte concentration (potassium salt concentration) in the electrolytic solution is preferably high, and the potassium salt concentration is, for example, 1 mol/L or higher and not higher than the saturation solubility.

The shape of the secondary battery (sodium secondary battery and potassium secondary battery) according to an embodiment of the present invention is not particularly limited, and the secondary battery can have, for example, a coin shape, a button shape, a sheet shape, a cylindrical shape, a rectangular shape, or a flat shape, according to the intended use.

The secondary battery (sodium secondary battery and potassium secondary battery) according to an embodiment of the present invention does not require lithium or a transition metal element and uses abundant and inexpensive raw materials (such as sodium, potassium, sulfur, and/or a carbonized product) and thus is suitable not only as a small battery, which is a power source for small equipment, but also as a medium or large battery. The secondary battery according to an embodiment of the present invention can be suitably used, for example, as an outdoor/indoor installed power source for factories, houses, and the like; and a load-leveling power source for various power generation, such as a charger for solar cells and a charger for wind power generation.

### Examples

Hereinafter, the present invention will be described more specifically with reference to examples, but the present invention is not limited to these. In addition, "%" in the following indicates "wt.%" unless otherwise specified.

### Experimental Example 1

A reagent sodium thiosulfate pentahydrate (Na₂S₂O₃·5H₂O, available from FUJIFILM Wako Pure Chemical Corporation) was used as a positive electrode active material of Experimental Example 1, acetylene black (available from Denka Company Limited, hereinafter described as "AB") was used for a conductive material, and poly(vinylidene fluoride) (available from DAIKIN INDUSTRIES, LTD., hereinafter described as "PVDF") was used as a binder. PVDF was used as a binder solution prepared by dissolving PVDF in N-methyl-2-pyrrolidone solution containing 0.5% carbon nanotubes (CNT) ("TUBALL^{™} BATT NMP PVDF" available from Kusumoto Chemicals, Ltd., hereinafter described as an "NMP solvent").

The positive electrode of Experimental Example 1 was prepared as follows.

A positive electrode mixture of Experimental Example 1 was prepared by uniformly mixing (kneading) 0.8 g (74% of the total) of sodium thiosulfate pentahydrate as a positive electrode active material and 0.2 g (19% of the total) of AB as a conductive material in 0.747 g of an NMP solvent containing 0.076 g (7.01% of the total) of PVDF (containing substantially 0.004 g of CNT, solid content ratio 0.37%).

The resulting positive electrode mixture was then applied to an aluminum sheet (thickness 16 µm) serving as a positive electrode current collector, and dried at 50°C for 3 hours, to obtain a positive electrode sheet. A 15 mm ϕ sheet was cut out from the resulting positive electrode sheet and was used as the positive electrode of Experimental Example 1.

A negative electrode was prepared as follows.

A waste tire-derived carbonized product "Renaisis A1 (product number)" was used as a negative electrode active material.

The waste tire-derived carbonized product "Renaisis A1 (product number)" is a carbonized product derived from waste tire thermal decomposition residues produced by heating a waste tire in an inert atmosphere vessel at 400°C for 2 hours to gasify components in the waste tire and cooling for conversion to oil (gasified and oiled components totaled about 55%), collecting residues that were not gasified and not converted to oil, further heat-treating the collected waste tire thermal decomposition residues, then pulverizing the residues to an average particle size of 20 µm, and then completely removing magnetic substances with an electromagnetic separator at 16000 gauss.

The negative electrode mixture was produced by mixing (kneading) 1.5 g (92.71% of the total) of the negative electrode active material (waste tire-derived carbonized product) and 0.106 g (6.55% of the total) of poly(acrylic acid) (available from FUJIFILM Wako Pure Chemical Corporation, product name 20CLPAH) as a binder with 1.2 g of an aqueous solution containing 0.007 g of carboxymethylcellulose (CMC) and 0.005 g of CNT ("TUBALL^{™} BATT H₂O CMC" available from Kusumoto Chemicals, Ltd.) as a solvent.

The resulting negative electrode mixture was then applied to an aluminum sheet (thickness 16 µm) serving as a negative electrode current collector, and dried at 70°C for 3 hours, to obtain a negative electrode sheet. A 11.3 mm ϕ sheet was cut out from the resulting negative electrode sheet and was used as the negative electrode.

The resulting positive electrode and negative electrode were combined with an electrolytic solution prepared by dissolving sodium bis(fluorosulfonyl)imide (NaFSI) as a sodium salt in tris(2,2,2-trifluoroethyl)phosphate (TFEP) to give a concentration of 2 mol/L (hereinafter described as "NaFSI/TFEP") and Celgard 2400 as a separator, and a battery of Experimental Example 1 (coin-type battery (cylindrical shape, outer diameter 20 mm/height 3.2 mm), hereinafter described as a "coin-type battery (R2032)") was obtained.

A charge-discharge test was performed using the battery of Experimental Example 1 under the conditions shown below, while the temperature was maintained at 25°C.
Cell configuration: bipolar
Positive electrode: an electrode containing the positive electrode active material
Negative electrode: an electrode containing the negative electrode active material
Electrolyte: 2M NaFSI/TFEP
Charge-discharge conditions
Voltage range: from 0.5 to 3.9 V

Charging was performed by CVCC charging in which a constant current was continuously applied up to 3.9 V, then a current sufficient to maintain the voltage was applied for 5 hours, and the current value decreased.

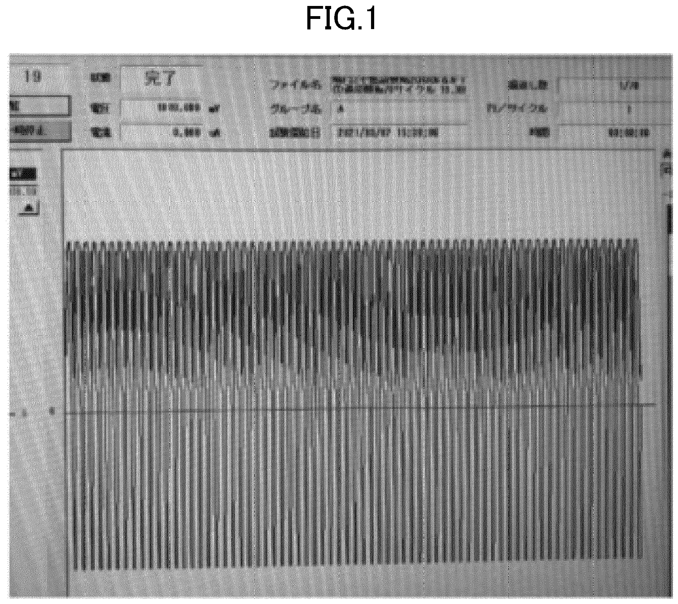

The results of the charge-discharge test of the battery of Experimental Example 1 are as follows. The measurement data of the charge-discharge test is shown in FIG. 1.
133.5 µA/1.766 cm² (positive electrode 15 mm cp)
Number of charge-discharge cycles: 20 times
Discharge time: about 1 hour (133 µAh)

### Experimental Example 2

A positive electrode active material of Experimental Example 2 was obtained by the following procedure.

"Renaisis A1 (product number)" (the same one as that of the negative electrode of Experimental Example 1) was used as the carbonized product. In a stainless steel vessel, 5.5 g (24.2% of total raw materials) of the carbonized product (waste tire-derived carbonized product), 8.44 g (37.2% of total raw materials) of sodium percarbonate, 2.75 g (12.1% of total raw materials) of coal tar, and 6 g (26.4% of total raw materials) of sulfur were kneaded, and the vessel was placed in a heating furnace. To create an inert atmosphere in the vessel, the vessel was purged with nitrogen gas, and heating was started after 10 minutes. The temperature increase was set to 300°C in 50 minutes, and heating was continued also after temperature had reached 300°C, and then heating was stopped at 350°C. Thereafter, after the temperature had decreased to 200°C, the vessel was taken out from the heating furnace and naturally cooled. After the internal temperature of the vessel decreased to 50°C or lower, a synthesized product was taken out. The weight of the synthesized product was 15.2 g. The synthesized product was pulverized with a mixer, and the positive electrode active material of Experimental Example 2 including a powder with an average particle size of 20 µm was obtained.

The resulting positive electrode active material of Experimental Example 2 was evaluated by powder X-ray diffraction measurement (XRD) and X-ray absorption fine structure measurement (XAFS). The measurement instruments and measurement conditions are as follows.

### Powder X-ray diffraction measurement

The powder X-ray diffraction measurement (XRD) was performed using a model number: D8 ADVANCE available from Bruker axs.

In the measurement, a powder sample was filled in a dedicated substrate, and a powder X-ray diffraction pattern was obtained using a CuK α radiation source.

### X-ray absorption fine structure measurement

X-ray absorption fine structure (XAFS, transmission method) was evaluated using BL11 at the Kyushu Synchrotron Light Research Center.

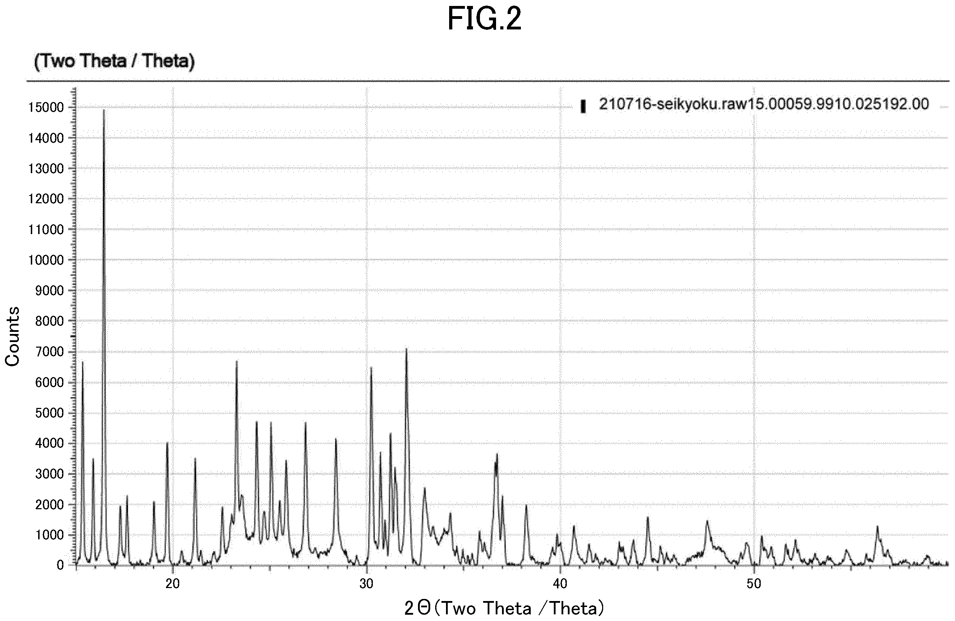

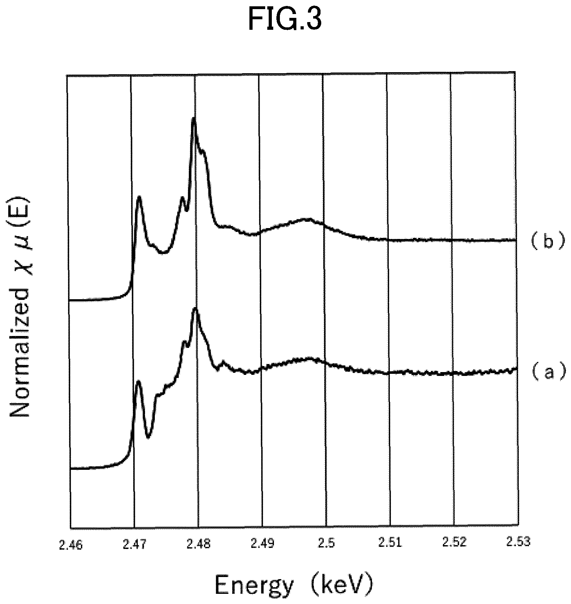

The XRD pattern of the positive electrode active material of Experimental Example 2 is shown in FIG. 2, and the XAFS spectrum (S K-edge) is shown in FIG. 3.

Comparison of the XRD profile of the positive electrode active material of Experimental Example 2 in FIG. 2 with data of Crysyallography Open Database (COD) revealed disappearance of the signal of sodium percarbonate and a signal consistent with sodium thiosulfate pentahydrate was observed.

In addition, from FIG. 3, it is confirmed that the XAFS spectra of the positive electrode active material of Experimental Example 2 and sodium thiosulfate pentahydrate (reagent) almost coincided with each other.

From the above results, it is confirmed that the positive electrode active material of Experimental Example 2 contained a crystal of sodium thiosulfate pentahydrate.

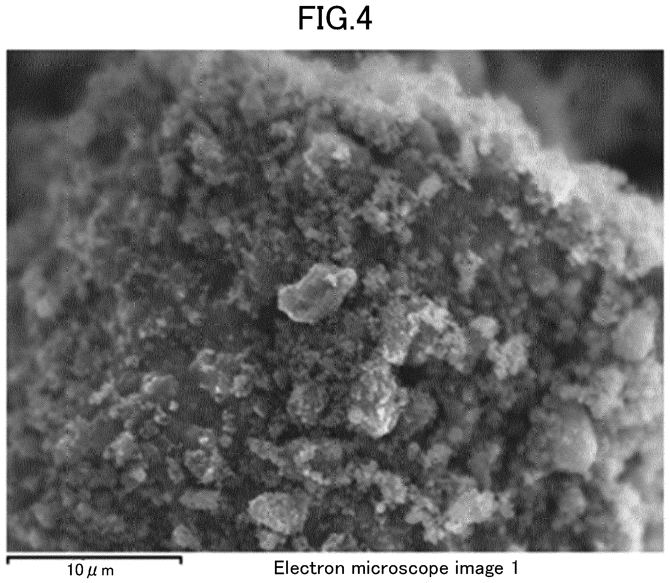

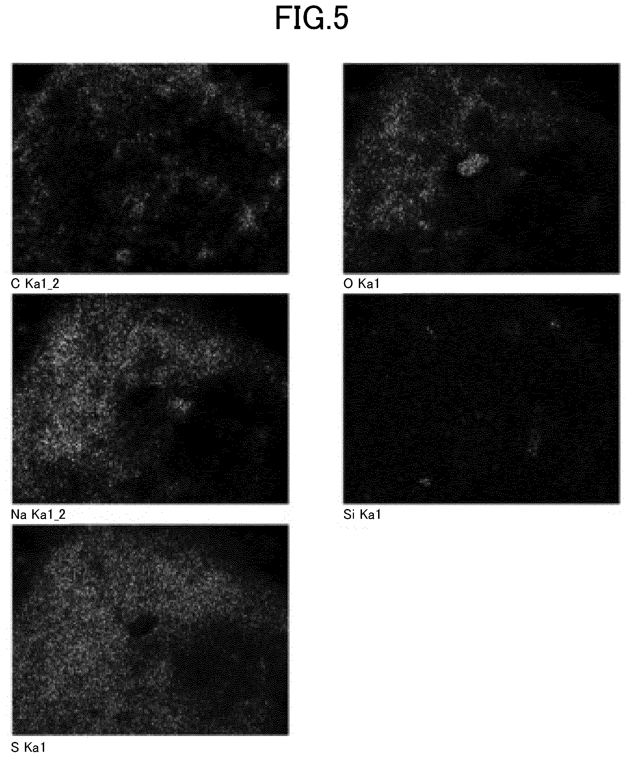

An electron microscope image 1 of the positive electrode active material of Experimental Example 2 is shown in FIG. 4, and a result of the EDX mapping corresponding to FIG. 4 is shown in FIG. 5. In the EDX mapping, Na and S were distributed throughout the carbonized product, and thus the positive electrode active material of Experimental Example 2 was determined to be a composite in which sodium thiosulfate was uniformly dispersed in the carbonized product.

A positive electrode of Experimental Example 2 was obtained as follows.

A positive electrode mixture of Experimental Example 2 was produced by uniformly mixing (kneading) 2 g (94.49% of the total) of the positive electrode active material of Experimental Example 2 and 0.056 g (2.64% of the total) of AB as a conductive material in 0.673 g of an NMP solvent containing 0.058 g (2.71% of the total) of PVDF (containing substantially 0.003 g of CNT, solid content ratio 0.08%). The resulting positive electrode mixture was then applied to an aluminum sheet (thickness 16 µm) serving as a positive electrode current collector, and dried at 50°C for 3 hours, to obtain a positive electrode sheet. A 15 mm ϕ sheet was cut out from the resulting positive electrode sheet and was used as the positive electrode of Experimental Example 2.

A battery of Experimental Example 2 (coin-type battery (R2032)) was obtained in the same manner as in Experimental Example 1 except that the positive electrode of Experimental Example 2 was used.

The results of the charge-discharge test of the battery of Experimental Example 2 are as follows.
73.5 µA/1.766 cm² (positive electrode 15 mm cp)
Number of charge-discharge cycles: 20 times
Discharge time: about 4 hours (73.5 µAh)

### Experimental Example 3

A positive electrode of Experimental Example 3 was produced as follows.

A reagent potassium thiosulfate anhydride was used as a positive electrode active material of Experimental Example 3. A positive electrode mixture of Experimental Example 3 was produced by uniformly mixing (kneading) 1.003 g (86% of the total) of potassium thiosulfate anhydride and 0.063 g (5.41% of the total) of AB as a conductive material in 2.453 g of an NMP solvent containing 0.073 g (6.27% of the total) of PVDF (containing substantially 0.025 g of CNT, solid content ratio 2.14%).

The resulting positive electrode mixture was then applied to an aluminum sheet (thickness 16 µm) serving as a positive electrode current collector, and dried at 50°C for 3 hours, to obtain a positive electrode sheet. A 15 mm ϕ sheet was cut out from the resulting positive electrode sheet and was used as the positive electrode of Experimental Example 3.

The negative electrode was prepared by the same procedure as in Experimental Example 1.

The resulting positive electrode and negative electrode were combined with an electrolytic solution prepared by dissolving potassium bis(fluorosulfonyl)imide (KFSI) as a potassium salt in tris(2,2,2-trifluoroethyl)phosphate (TFEP) to give a concentration of 2 mol/L (hereinafter described as "KFSVTFEP") and Celgard 2400 as a separator, and a battery of Experimental Example 3 (coin-type battery (R2032)) was produced.

A charge-discharge test was performed using the battery of Experimental Example 3 under the conditions shown below, while the temperature was maintained at 25°C.
Cell configuration: bipolar
Positive electrode: an electrode containing the positive electrode active material
Negative electrode: an electrode containing the negative electrode active material
Electrolyte: 2M KFSI/TFEP
Charge-discharge conditions
Voltage range: from 2.0 to 4.2 V

Charging was performed by CVCC charging in which a constant current was continuously applied up to 4.2 V, then a current sufficient to maintain the voltage was applied for 5 hours, and the current value decreased.

The results of the charge-discharge test of the battery of Experimental Example 3 are as follows.
62.4 µA/1.766 cm² (positive electrode 15 mm cp)
Number of charge-discharge cycles: 5 times
Discharge time: about 4 hours (62.4 µAh)

### Experimental Example 4

A positive electrode active material of Experimental Example 4 was produced by the following procedure.

"Renaisis A1 (product number)" (the same one as that of the negative electrode of Experimental Example 1) was used as the carbonized product. In a stainless steel vessel, 48.8 g of total raw materials of 10 g (20% of total raw materials) of the carbonized product (waste tire-derived carbonized product), 25 g (51% of total raw materials) of potassium hydrogencarbonate, 3.8 g (8% of total raw materials) of coal tar, and 10 g (20% of total raw materials) of sulfur were kneaded, and the vessel was placed in a heating furnace. To create an inert atmosphere in the vessel, the vessel was purged with nitrogen gas, and heating was started after 10 minutes. The temperature was increased to 300°C over a period of 50 minutes, and after the temperature reached 300°C, heating was continued and was stopped at 350°C. Thereafter, after the temperature decreased to 200°C, the vessel was taken out from the heating furnace and naturally cooled. After the internal temperature of the vessel decreased to 50°C or lower, a synthesized product was taken out. The weight of the synthesized product was 32.5 g, representing a yield of 67%. The synthesized product was pulverized with a mixer, and the positive electrode active material of Experimental Example 4 including a powder with an average particle size of 20 µm was obtained. The positive electrode active material of Experimental Example 4 was evaluated by XRD, and it was confirmed that a crystal of potassium thiosulfate was contained.

A positive electrode mixture and a positive electrode of Experimental Example 4 were produced in the same manner as in Experimental Example 3 except that the positive electrode active material of Experimental Example 4 was used. In addition, a battery of Experimental Example 4 (coin-type battery (R2032)) was obtained in the same manner as in Experimental Example 3 except that the positive electrode of Experimental Example 4 was used.

A charge-discharge test was performed using the battery of Experimental Example 4 under the same conditions as those in Experimental Example 3, while the temperature was maintained at 25°C.

The results of the charge-discharge test are as follows.
64.7 µA/1.766 cm² (positive electrode 15 mm cp)
Number of charge-discharge cycles: 5 times
Discharge time: about 5 hours (64.7 µAh)

## Claims

1. A positive electrode active material comprising a sulfur-containing compound represented by Na₂S₂O₃ or K₂S₂O₃.

2. A positive electrode active material comprising a composite of:
a sulfur-containing compound containing Na₂S₂O₃ or K₂S₂O₃; and
a carbonized product.

3. The positive electrode active material according to claim 2, wherein the carbonized product is a tire-derived carbonized product.

4. A positive electrode mixture containing:
the positive electrode active material described in any one of claims 1 to 3; and
a conductive material.

5. A secondary battery comprising:
a positive electrode;
a negative electrode; and
an electrolyte, wherein
the positive electrode is formed using the positive electrode mixture described in claim 4.

6. The secondary battery according to claim 5, being a sodium secondary battery, wherein
the electrolyte is a liquid electrolyte containing:
a sodium salt as an electrolyte salt; and
a fluorinated phosphate ester as a non-aqueous solvent.

7. The secondary battery according to claim 6, wherein the liquid electrolyte includes:
a sodium salt; and
tris(2,2,2-trifluoroethyl)phosphate (TFEP).

8. The secondary battery according to claim 6 or 7, wherein the sodium salt is sodium bis(fluorosulfonyl)imide (NaFSI).

9. The secondary battery according to claim 5, being a potassium secondary battery, wherein
the electrolyte is a liquid electrolyte containing:
a potassium salt as an electrolyte salt; and
a fluorinated phosphate ester as a non-aqueous solvent.

10. The secondary battery according to claim 9, wherein the liquid electrolyte includes:
a potassium salt; and
tris(2,2,2-trifluoroethyl)phosphate (TFEP).

11. The secondary battery according to claim 9 or 10, wherein the potassium salt is potassium bis(fluorosulfonyl)imide (KFSI).

12. A positive electrode active material comprising a sulfur-containing compound represented by Formula (1) or Formula (2):
[Chem. 1]
MₓS_{y}O_{z} (1)
where M is Na or K, x is in a range of more than 0 and 3 or less, y is 1 or more and 7 or less, and z is 1 or more and 7 or less, and
[Chem. 2]
MₓHS_{y}O_{z} (2)
where M is Na or K, x is in a range of more than 0 and 3 or less, y is more than 0 and 7 or less, and z is 1 or more and 7 or less.

13. The positive electrode active material according to claim 12, wherein the sulfur-containing compound contains a sulfur-containing compound represented by Na₂S₂O₃ or K₂S₂O₃.

14. The positive electrode active material according to claim 12, wherein the sulfur-containing compound includes a sulfur-containing compound represented by Na₂S₂O₃ or K₂S₂O₃.

15. The positive electrode active material according to claim 12 or 13, comprising a composite of the sulfur-containing compound and a carbonized product.

16. The positive electrode active material according to claim 15, wherein the carbonized product is a tire-derived carbonized product.

17. A positive electrode mixture containing:
the positive electrode active material described in any one of claims 12 to 16; and
a conductive material.

18. A secondary battery comprising a positive electrode, a negative electrode, and an electrolyte, wherein the positive electrode is formed using the positive electrode mixture described in claim 17.
